# EUROPEAN PATENT APPLICATION

(11) **EP 0 669 184 A1**
(43) Date of publication of application: **30.08.1995**
(21) Application number: 95300622.8
(22) Date of filing: 01.02.1995
(51) Int. Cl.: B23P 19/04, B25B 27/00

(54) **Fitting sealing strips**

(30) Priority: 01.02.1994 GB 9401906
(71) Applicant: Standard Products Limited, Huntingdon Cambridgeshire PE18 6DD (GB)
(72) Inventor: Pike, Harold, Near Elsworth, Cambridgeshire, CB3 8LR (GB)
(74) Representative: O'Connell, David Christopher

(57) **Abstract**

A tool (2) for fitting a channel-shaped sealing strip to a flange has means (10,12) for applying pressure and/or traction to side walls of the channel, and means for applying pressure to the end of the channel, the latter being in the form of a rigid metal surface (22).

## Description

The present invention relates to a tool for fitting sealing strips, and a method of fitting sealing strips using such a tool.

Sealing strips are fitted to flanges around the doors, and around the door frames, in motor vehicles. Such sealing strips conventionally have a cross-section which is generally U-shaped, with the size and shape of the strip being chosen so that it fits tightly over the flange.

One possibility, known for example from EP-A-0451023, is to supply the strips in a "closed" form in which they fit tightly over the flanges, and to provide a tool which forces the strip over the flange using a hammer action.

It has also become known for the strips to be supplied "open", i.e. initially splayed slightly outwards, in order to allow the strip to be fitted easily to the flange. In these circumstances, it has been known, for example from GB-2237836A, to use a special fitting tool. This known tool comprises a roller mounted for rotation about a first axis such that a circumferential surface thereof defines a central part of a channel section. The known tool further comprises two additional rollers, mounted about mutually parallel axes such that their circumferential surfaces define side portions of a channel section, and mounted behind the first roller in an intended direction of travel of the tool. The first roller applies pressure to the base of the U-shaped strip, while the second and third rollers apply pressure to the sides of the U-shaped such that the strip is fitted tightly to the flange.

The present invention seeks to provide a tool which alleviates the disadvantages of the known tool, and of the associated method of fixing strips to flanges.

According to a first aspect of the present invention, there is provided a tool for closing a channel-shaped strip to a flange, the tool comprising means for applying pressure and/or traction to the sides of the channel, and means for applying pressure to the end of the channel while the tool is sliding along the channel, the means for applying pressure to the end of the channel comprising a rigid metal surface.

This tool has the advantage that it is comparatively easy and cheap to manufacture, and provides improved performance compared with known tools.

Preferably, the metal surface is polished.

Even more preferably, the metal surface is polished steel, with stainless steel being preferable to mild steel.

This has the advantage that there is low friction between the metal surface and the strip which is being applied.

According to a second aspect of the invention, there is provided a method of fitting a channel-shaped strip to a flange, the method comprising the steps of:
providing a strip with sides originally spaced apart, so that the strip may be hand-positioned on the flange;
positioning the strip over the flange; and
closing the strip on the flange by means of a tool having means for applying pressure and/or traction to the sides of the channel, and a rigid metal surface for applying pressure to the end of the channel while the tool is sliding along the strip.

For a better understanding of the present invention, and to show how it may be brought into effect, reference will now be made, by way of example, to the accompanying drawings, in which:-
Figure 1 is a side view of a tool in accordance with the invention;
Figure 2 is a front view of the tool shown in Figure 1; and
Figure 3 is a view from below of the tool shown in Figures 1 and 2.

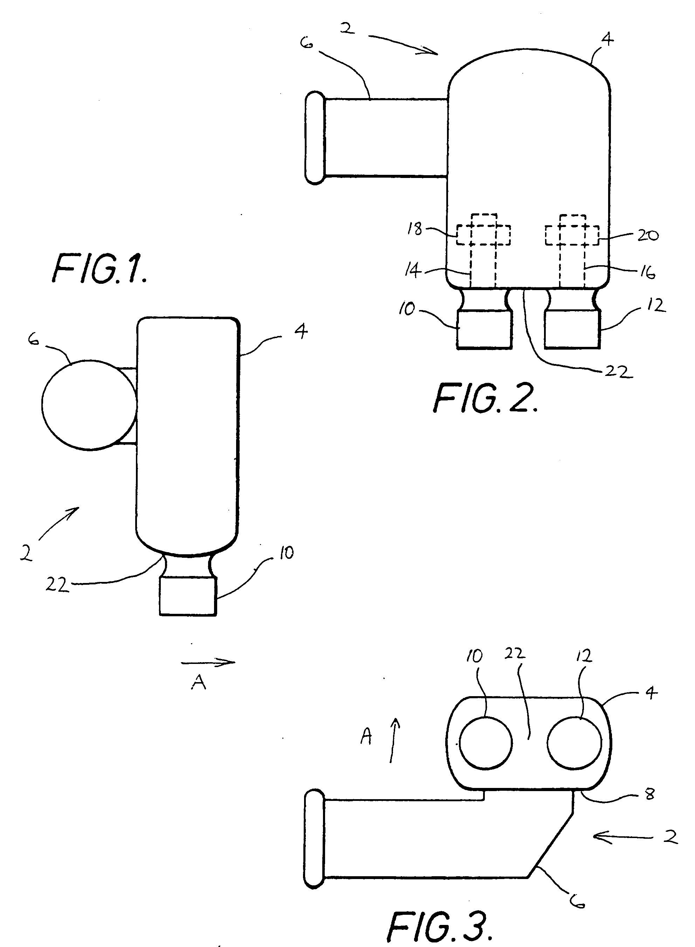

Figures 1-3 show a tool 2 having a main body 4 and a handle 6. The handle 6 is in the form of a pneumatic nut runner, and is connected to a rear part 8 of the main body 4, as compared with the intended direction of travel of the tool relative to a sealing strip, shown by arrow A.

The tool may be operated manually, or may be connected to a robotic manipulator for tracking along a sealing strip.

As with other tools of this type, this tool is used to apply a sealing strip firmly to a flange, for example on a motor vehicle door, or a frame for a motor vehicle door. The sealing strip is in the form of a generally U-shaped channel, initially supplied with its legs splayed slightly outwards. This allows the strip to be hand-positioned easily over the flange, and the tool of this invention is then used to close the sides of the U-shaped channel, so that the strip is held firmly on the flange.

To achieve this, the tool 2 must apply pressure and/or traction to the sides of the sealing strip, and to the central section of the sealing strip. In this illustrated embodiment of the invention, pressure is applied to the sides of the sealing strip by a pair of rollers 10, 12, which are rotatably mounted on respective axles 14, 16 in respective bearings 18, 20. When a sealing strip is placed between the rollers 10, 12, the rollers exert pressure on the side walls of the sealing strip, and the tool can be rolled along the sealing strip exerting pressure and/or traction on the side walls to close the strip around the flange to which it is being applied. It is emphasised, however, that other mechanisms for applying pressure and/or traction to the side walls of the strip are available, and may be used in tools in accordance with the present invention.

Pressure must also be applied to the central section of the sealing strip as the tool 2 is being moved along the strip. In the illustrated embodiment, pressure is applied by a polished metal surface 22 on the underside of the main body of the tool 2. The surface 22 is made of highly polished rigid stainless steel 1.5 mm (1/16 inch) thick, which is applied to the underside of the main body of the tool 2. It will be noted, however, that the underside of the main body could itself be treated to provide a surface with the desired properties.

It has been found, somewhat surprisingly, that polished stainless steel performs better than other materials, including PTFE-coated steel. Clearly, although the surface 22 is described herein as being made of metal, it may be made of any material which has the desired properties, such as durability, and sufficiently low sliding friction with the rubbery materials from which sealing strips are made.

It will be seen from Figure 1 in particular that the surface 22 is convex. This is necessary if the tool is to be used to apply sealing strips to flanges around, for example, door frames.

In use, the tool is used to close the sides of the channel by placing it over the sealing strip and applying pressure to the top of the channel through the metal surface 22. The tool can then be moved along the strip, such that the rollers 10, 12 rotate about their axes 14, 16 while applying pressure and/or traction to the sides of the channel, and the top of the channel slides along the metal surface 22.

There is therefore provided a tool which, while of simple construction, provides surprisingly high performance in applying sealing strips to flanges.

## Claims

1. A tool for closing a channel-shaped strip onto a flange, the tool comprising means (10, 12) for applying pressure and/or traction to the sides of the channel, and means for applying pressure to the end of the channel while the tool is sliding along the channel, the means for applying pressure to the end of the channel comprising a rigid metal surface (22).

2. A tool as claimed in claim 1, wherein the metal surface is made of steel.

3. A tool as claimed in claim 2, wherein the metal surface is made of stainless steel.

4. A tool as claimed in any preceding claim, wherein the metal surface is polished.

5. A tool as claimed in any preceding claim, comprising a handle for manual operation.

6. A tool as claimed in any preceding claim, wherein the means for applying pressure and/or traction to the sides of the channel comprise rollers, which apply pressure to close the sides of the channel onto the flange while the rigid metal surface slides along the end of the channel applying pressure thereto.

7. A method of fitting a channel-shaped strip to a flange, the method comprising the steps of:
providing a strip with sides originally spaced apart, so that the strip may be hand-positioned on the flange;
positioning the strip over the flange; and
closing the strip on the flange by means of a tool having means for applying pressure and/or traction to the sides of the channel, and a rigid metal surface for applying pressure to the end of the channel while the tool is sliding along the strip.
